# EUROPÄISCHE PATENTSCHRIFT

(11) **EP 3 298 297 B1**
(45) Veröffentlichungstag und Bekanntmachung des Hinweises auf die Patenterteilung: **25.08.2021**
(21) Anmeldenummer: 16710919.8
(22) Anmeldetag: 16.03.2016
(51) Int. Cl.: F16D 55/28, F16D 121/22, F16D 121/14, F16D 129/06

(54) **BREMSANORDNUNG UND VERFAHREN ZUM BETREIBEN EINER BREMSANORDNUNG**
BRAKE ARRANGEMENT AND METHOD FOR OPERATING A BRAKE ARRANGEMENT
ENSEMBLE FREIN ET PROCÉDÉ POUR FAIRE FONCTIONNER UN ENSEMBLE FREIN

(30) Priorität: 20.05.2015 DE 102015006384
(43) Veröffentlichungstag der Anmeldung: 28.03.2018
(73) Patentinhaber: SEW-EURODRIVE GmbH & Co. KG, 76646 Bruchsal (DE)
(72) Erfinder: BÖCKLE, Jürgen, 76646 Bruchsal (DE); DEGEN, Dirk, 76646 Bruchsal (DE); SCHMIDT, Josef, 76676 Graben-Neudorf (DE)
(86) Internationale Anmeldenummer: PCT/EP2016/000466
(87) Internationale Veröffentlichungsnummer: WO 2016/184536

(56) Entgegenhaltungen:
- DE-A1- 3 627 788
- US-A- 5 185 542

## Beschreibung

Die Erfindung betrifft eine Bremsanordnung und ein Verfahren zum Betreiben einer Bremsanordnung.

Es ist allgemein bekannt, dass bei einer elektromagnetisch betätigbaren Bremse durch Bestromen einer Spule der Bremse die Bremse lüftbar ist.

Aus der DE 36 27 788 A1 ist als nächstliegender Stand der Technik eine Drehwerksbremse bekannt.

Aus der DE US 5 185 542 A ist ebenfalls eine bistabile Bremse bekannt.

Der Erfindung liegt daher die Aufgabe zugrunde, eine umweltschonende, insbesondere ressourcenschonende Bremse auszubilden.

Erfindungsgemäß wird die Aufgabe bei der Bremsanordnung nach den in Anspruch 1 und bei dem Verfahren nach den in Anspruch 7 angegebenen Merkmalen gelöst.

Von Vorteil ist dabei, dass nur Zustandsänderungen elektrische Energie benötigen. Da der sonstige Betrieb stromlos ausführbar ist, wird die Umwelt geschont und ebenso werden die Energieressourcen geschont.

Von Vorteil ist dabei, dass zum Betrieb der Bremse nur geringe elektrische Energie notwendig ist. Denn die Bremse ist bistabil ausgebildet. Der gelüftete Zustand ist ebenso stromlos aufrecht erhaltbar wie der eingefallene Zustand. Nur die Zustandsänderung, also beispielsweise das Lüften oder das Einfallen, benötigt elektrische Energie. Somit wird die Umwelt geschont und ebenso werden die Energieressourcen geschont.

Bei einer vorteilhaften Ausgestaltung ist der Mitnehmer mittels Passfederverbindung mit der Welle verbunden. Von Vorteil ist dabei, dass eine einfache kostengünstige Verbindung vorgesehen ist.

Bei einer vorteilhaften Ausgestaltung liegt im gelüfteten Zustand der Bremse die Ankerscheibe an einem ferromagnetischen Teil, insbesondere Innenring, an, in oder von welchem die Spule aufgenommen ist. Von Vorteil ist dabei, dass kein Luftspalt für den Magnetfluss vorliegt und somit die Dauermagnete eine starke anziehende Kraft auf die Ankerscheibe ausüben.

Bei einer vorteilhaften Ausgestaltung wird im eingefallenen Zustand die Ankerscheibe von den Federelementen auf den Bremsbelagträger derart gedrückt, dass der Bremsbelagträger auf die Bremsfläche gedrückt wird, wobei der Bremsbelagträger axial zwischen Ankerscheibe und dem die Bremsfläche aufweisenden Teil angeordnet ist. Von Vorteil ist dabei, dass beidseitig des Bremsbelagträgers Reibungskraft erzeugt wird.

Bei einer vorteilhaften Ausgestaltung ist im eingefallenen Zustand ein Luftspalt zwischen Ankerscheibe und dem die Spule aufnehmenden Teil vorhanden, insbesondere wobei im gelüfteten Zustand kein Luftspalt zwischen Ankerscheibe und einem als Spulenkern fungierenden Teil vorhanden ist, insbesondere wobei die Dauermagnete mit dem als Spulenkern fungierenden Teil verbunden und/oder berührend zu diesem angeordnet sind. Von Vorteil ist dabei, dass ein Luftspalt vom von den Dauermagneten erzeugten Magnetfluss überwunden werden muss und somit die von den Dauermagneten erzeugte, auf die Ankerscheibe anziehend wirkende Kraft viel schwächer ist als im gelüfteten Zustand. Somit genügt die von den Federelementen gegenwirkend erzeugte Federkraft zum Aufrechterhalten des eingefallenen Zustands und die Bremswirkung wird entsprechend aufrecht erhalten.

Bei einer vorteilhaften Ausgestaltung sind die Dauermagnete an dem die Spule aufnehmenden Teil berührend angeordnet. Von Vorteil ist dabei, dass kein Luftspalt vorhanden ist und somit der Magnetfluss einen möglichst verschwindenden oder zumindest geringen Widerstand im Übergangsbereich spürt.

Erfindungsgemäß ist die Spule mit einer Kapazität in Reihe geschaltet, wobei die Reihenschaltung aus einer Gleichspannungsquelle zum Lüften versorgbar ist und wobei zum Einfallen der Bremse die Reihenschaltung kurzschließbar ist, insbesondere wobei ein steuerbarer Schalter zum Kurzschließen der Reihenschaltung vorgesehen ist und wobei ein steuerbarer Schalter zum Verbinden der Reihenschaltung mit der Gleichspannungsquelle vorgesehen ist. Von Vorteil ist dabei, dass eine einfache Ausführung erreichbar ist.

Erfindungsgemäß sind die Dauermagnete in einer topfförmigen Ausnehmung des Spulenkerns aufgenommen. Von Vorteil ist dabei, dass eine einfache Herstellung ausführbar ist und ein möglichst großer Anteil des von den Dauermagneten erzeugten Magnetflusses umlenkbar ist.

Erfindungsgemäß ist der Spulenkern zweiteilig oder mehrteilig ausgeführt, wobei ein erster Teil des Spulenkerns topfförmig gestaltet ist und ein zweiter Teil als Innenring ausgeführt ist, der in dem topfförmigen ersten Teil aufgenommen ist, insbesondere wobei die Dauermagnete zwischen dem ersten und dem zweiten Teil angeordnet sind. Von Vorteil ist dabei, dass verschiedene Materialien verwendbar sind. Der erste Teil ist aus einem ferromagnetischen Stahlguss und der zweite Teil aus einem ferromagnetischen Stahl herstellbar.

Erfindungsgemäß sind die Dauermagnete jeweils auf derselben Axialposition und auf demselben Radialabstand angeordnet, aber in Umfangsrichtung voneinander beabstandet sind. Von Vorteil ist dabei, dass mehrere gleichartige, insbesondere quaderförmige Dauermagnete anordenbar sind. Dabei ist die Magnetisierungsrichtung jeweils bevorzugt in axialer Richtung gerichtet.

Wichtige Merkmale bei dem Verfahren zum Betreiben einer Bremsanordnung mit Spule sind, dass die Spule elektrisch mit einer Kapazität in Reihe geschaltet ist,
wobei zum Lüften die Reihenschaltung von einer Gleichspannungsquelle versorgt wird und zum Einfallen die Reihenschaltung kurzgeschlossen wird beziehungsweise eine verschwindend geringe Spannung an die Reihenschaltung angelegt wird.

Von Vorteil ist dabei, dass eine einfache Bedienung ermöglicht ist und beim Lüften nur geringe Energiemengen notwendig sind. Somit ist die Bremse bistabil ausgebildet, wobei durch einen kurzzeitigen Stromstoß das Lüften und durch einen kurzzeitigen gegenläufigen Stromstoß das Einfallen der Bremse einleitbar ist.

Weitere Vorteile ergeben sich aus den Unteransprüchen.

Die Erfindung wird nun anhand von Abbildungen näher erläutert:

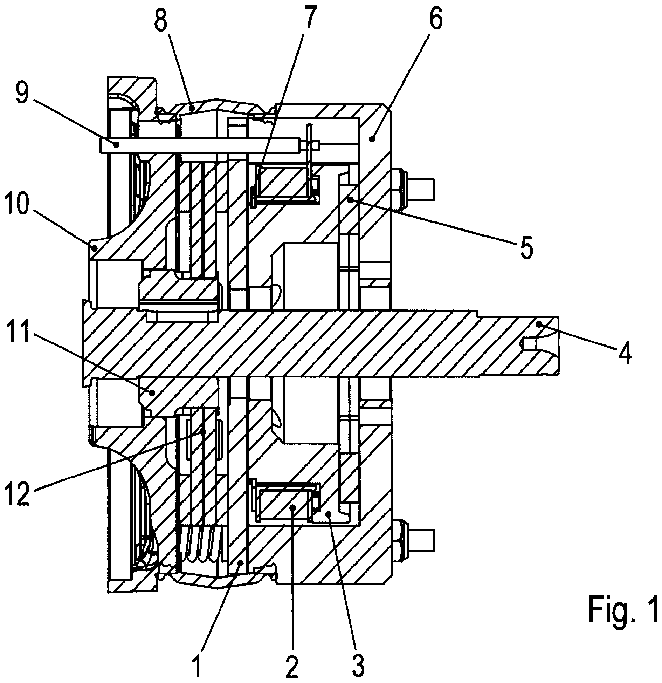

In der Figur 1 ist eine erfindungsgemäße Bremsanordnung im Querschnitt gezeigt.

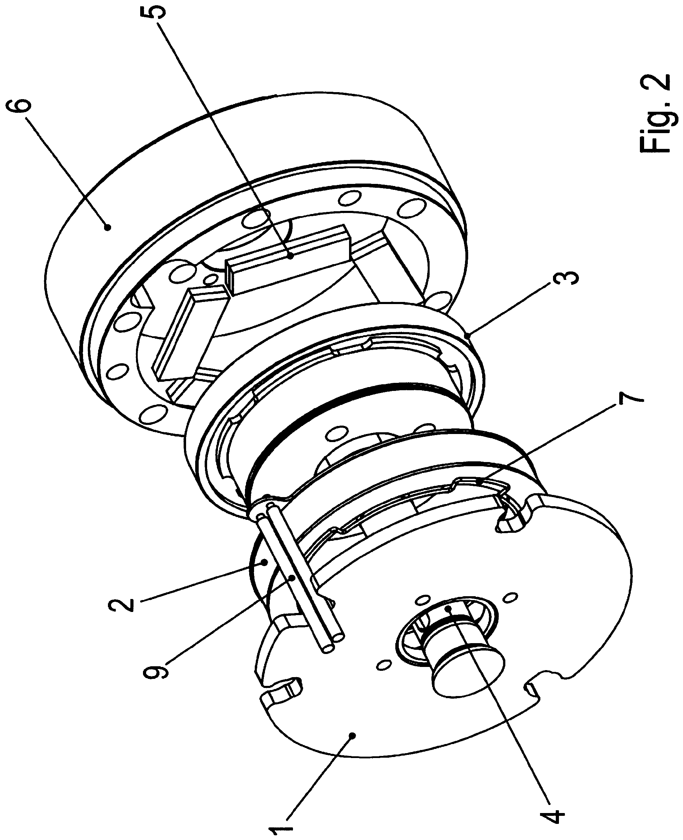

In der Figur 2 ist ein Teil der Bremsanordnung in explodierter Darstellung gezeigt.

Wie in den Figuren gezeigt, weist die Bremsanordnung eine abzubremsende Welle 4 auf, auf der ein Mitnehmer 11 angeordnet und drehfest mit der Welle 4 verbunden ist. Vorzugsweise ist hierzu eine Passfederverbindung zwischen Mitnehmer 11 und Welle 4 vorgesehen.

Der Mitnehmer 11 weist an seinem Außenumfang eine Außenverzahnung auf, deren Zähne sich in axialer Richtung erstrecken. Vorzugsweise ist also ein verschwindender Schrägungswinkel der Verzahnung vorgesehen, also die Außenverzahnung als Geradverzahnung ausgeführt.

Die Außenverzahnung steht im Eingriff mit einer Innenverzahnung eines Bremsbelagträgers 12, der axial beidseitig mit Bremsbelägen ausgeführt ist.

Der Bremsbelagträger 12 ist somit drehfest mit dem Mitnehmer 11 verbunden aber axial verschiebbar.

Der Bremsbelagträger 12 ist axial zwischen einem Lagerschild 10, in welchem ein Lager zur Lagerung der Welle 4 aufnehmbar ist, und einer Ankerscheibe 1 angeordnet.

Das Lagerschild 10 ist mit einem als Magnetkörper ausgeführten Spulenkern 6 verbunden, insbesondere drehfest verbunden. Dieser ist wiederum mit einem Innenring 3 verbunden, von welchem die Spule 2 aufgenommen ist. Die Spule 2 wird über die Versorgungsleitung 9 elektrisch versorgt. Axial zwischen Innenring 3 und Spulenkern 6 sind Dauermagnete 5 auf nicht verschwindendem Radialabstand zur Wellenachse der Welle 4 angeordnet. Das von den Dauermagneten 5 erzeugte Magnetfeld verstärkt das von der Spule 2 bei deren Bestromung erzeugte Magnetfeld, wobei ein erster Anschluss der Spule 2 an ein positives Potential verbunden ist und ein zweiter Anschluss der Spule 2 an ein niedrigeres, insbesondere verschwindendes oder negatives, Potential verbunden ist.

Die Ankerscheibe ist auf mit dem Innenring 3 und/oder mit dem Spulenkern 6 verbundenen Bolzen aufgesteckt angeordnet, so dass die Ankerscheibe relativ zur Spule 2 und/oder relativ zum Spulenkern 6 axial bewegbar aber drehfest verbunden ist.

Der Innenring 3 ist aus ferromagnetischem Material. Ebenso ist der Spulenkern 6 aus ferromagnetischem Material, beispielsweise Stahlguss.

Die Spule 2 ist erfindungsgemäß formschlüssig am Innenring 3 gehalten mittels einer Haltefeder 7.

Der Arbeitsberiech der Bremsanordnung, also der von dem Bremsbelagträger 12 und/oder Ankerscheibe 1 überdeckte axiale Bereich, ist radial umgeben von einer Abdichtung 8, insbesondere Gummiabdichtung, welche am äußeren Umfang des Lagerschildes 10 einerseits und andererseits am äußeren Umfang des Spulenkerns 6 aufgelegt ist. Somit ist durch die Abdichtung ein gehäusebildender Schutz des Arbeitsbereichs erreicht.

Zum Betrieb wird die Spule 2 elektrisch in Reihe mit einer Kapazität angeordnet. Bei Einschalten der Bestromung, also Anlegen einer Gleichspannung an die Reihenschaltung, fließt somit kurzzeitig Strom, so dass die Spule 2 ein entsprechendes Magnetfeld erzeugt. Das Magnetfeld ist verstärkt durch das von den Dauermagneten 5 erzeugte Magnetfeld. Auf diese Weise wird die Ankerscheibe 1 zur Spule 2 hin gezogen, insbesondere entgegen der von Federelementen erzeugten Federkraft, und somit wird die Bremse gelüftet. Nach Aufladen der Kapazität fließt kein weiterer Strom. Da aber die Ankerscheibe 1 nahe an den Dauermagneten 5 positioniert ist und der Luftspalt zwischen Innenring 3 und Ankerscheibe 1 verringert ist oder sogar die Ankerscheibe 1 den Innenring 3 berührt, genügt das von den Dauermagneten 5 erzeugte Magnetfeld, um die Ankerschiebe 1 am Innenring 3, insbesondere entgegen der von den Federelementen erzeugten Federkraft, zu halten und somit die Bremse im gelüfteten Zustand zu halten.

Im weiteren Betrieb bleibt die Kapazität aufgeladen, aber der Stromfluss durch die Reihenschaltung bleibt unterbunden. Zum weiteren Lüften der Bremse ist also keine weitere elektrische Energie notwendig.

Zum Einfallen der Bremse wird die die Reihenschaltung versorgende Gleichspannung abgeschaltet, also sozusagen die Reihenschaltung kurzgeschlossen. Alternativ ist auch ein gesteuertes Reduzieren der Versorgungsspannung ausführbar. Somit wird dann die Spule 2 direkt aus der Kapazität versorgt, aber mit nun umgekehrter Stromrichtung. Auf diese Weise wird ein Gegenfeld zu dem von den Dauermagneten 5 erzeugten Magnetfeld erzeugt und die von den Federelementen erzeugte Federkraft drückt die Ankerscheibe 1 von dem Innenring 3 weg.

Bei eingefallener, also geschlossener, Bremsanordnung ist die Ankerscheibe 1 vom Innenring 3 beabstandet. Die von den Federelementen erzeugte Federkraft übersteigt die anziehende Kraft der Dauermagnete 5, da der Luftspalt zwischen Ankerscheibe 1 und Innenring 3 das Magnetfeld, insbesondere die magnetische Flussdichte reduziert.

Dabei drücken die Federelemente die Ankerscheibe 1 auf den Bremsbelagträger, insbesondere auf einen Bremsbelag des Bremsbelagträgers, so dass dieser axial auf eine am Lagerschild 10 ausgebildete Bremsfläche gedrückt wird. Somit werden die beidseitig am Bremsbelagträger 12 angeordneten Bremsbeläge zur Reibungskrafterzeugung genutzt.

Die Bremsanordnung ist derart dimensioniert, dass die bei eingefallener Bremse erzeugte Bremskraft ausreichend ist.

Bei unzulässig hoher Temperatur, beispielsweise durch einen Defekt an einem zugeordneten Elektromotor oder dergleichen, verlieren die Dauermagnete 5 ihre Magnetisierung und somit fällt die Bremse ein.

Die Bremsanordnung ist also in physikalisch natürlicher Weise geschützt gegen Übertemperatur.

Somit sind die Dauermagnete derart angeordnet, dass im gelüfteten Zustand die Ankerscheibe entgegen der von den Federelementen, die sich am Lagerschild10 oder einem anderen Gehäuseteil der Bremsanordnung abstützen, erzeugten Federkraft gehalten bleibt, auch wenn die Spule 2 stromlos ist.

Wenn jedoch die Ankerscheibe 1 von den Federelementen auf den Bremsbelagträger 12 gedrückt ist, genügt die von den Dauermagneten 5 bewirkte, die Ankerscheibe 1 anziehende Kraft nicht, um die von den Federelementen bewirkte Federkraft zu überwinden. Erst durch Bestromung der Spule 2 ist ein Überwinden ermöglicht und somit ein Lüften der Bremsanordnung.

### Bezugszeichenliste

1 Ankerscheibe
2 Spule
3 Innenring
4 Welle
5 Dauermagnete
6 Spulenkern
7 Haltefeder für Spule
8 Dichtelement, insbesondere Gummiabdichtung
9 Versorgungsleitung
10 Lagerschild
11 Mitnehmer
12 Belagträger mit Bremsbelägen, insbesondere axial beidseitig

## Patentansprüche

1. Bremsanordnung mit
- einer Ankerscheibe (1),
- einem Spulenkern (6),
- einer Spule (2),
- einem Bremsbelagträger (12),
- einem eine Bremsfläche aufweisenden Teil, insbesondere Lagerschild (10),
- Dauermagneten (5),
- einer Welle (4) und
- einem Mitnehmer (11),
wobei die Ankerscheibe (1) drehfest aber axial bewegbar zum Spulenkern (6) angeordnet ist, wobei Spule (2), Spulenkern (6) und das eine Bremsfläche aufweisende Teil verbunden sind, insbesondere fest verbunden sind,
wobei die Welle (4) mit dem Mitnehmer (11) fest verbunden ist,
wobei der Mitnehmer (11) eine Außenverzahnung aufweist, die mit einer Innenverzahnung des Bremsbelagträgers (12) im Eingriff ist, so dass der Bremsbelagträger (12) mit dem Mitnehmer (11) und somit mit der Welle (4) drehfest aber axial bewegbar verbunden ist,
wobei die Bremsanordnung in einen gelüfteten Zustand oder einen eingefallenen Zustand bringbar ist,
wobei im gelüfteten Zustand der Bremsanordnung die Ankerscheibe (1) näher an der Spule (2) angeordnet ist als im eingefallenen Zustand der Bremsanordnung,
wobei eine von Federelementen erzeugte Federkraft auf die Ankerscheibe (1) wirkt,
wobei die Dauermagnete (5) derart angeordnet sind, dass die Ankerscheibe (1) im gelüfteten Zustand von den Dauermagneten (5) haltbar ist, insbesondere bei unbestromter Spule (2), insbesondere wobei die von den Dauermagneten (5) bewirkte auf die Ankerscheibe (1) wirkende Kraft die Federkraft betragsmäßig übersteigt,
wobei die Ankerscheibe (1) im eingefallenen Zustand von der Federkraft gehalten ist, insbesondere bei unbestromter Spule (2), insbesondere wobei die Federkraft die von den Dauermagneten (5) bewirkte auf die Ankerscheibe (1) wirkende Kraft betragsmäßig übersteigt,
wobei die Spule (2) mit einer Kapazität in Reihe geschaltet ist, wobei die Reihenschaltung aus einer Gleichspannungsquelle zum Lüften versorgbar ist und wobei zum Einfallen der Bremse die Reihenschaltung kurzschließbar ist,
insbesondere wobei ein steuerbarer Schalter zum Kurzschließen der Reihenschaltung vorgesehen ist und wobei ein steuerbarer Schalter zum Verbinden der Reihenschaltung mit der Gleichspannungsquelle vorgesehen ist,
wobei die Dauermagnete (5) in einer topfförmigen Ausnehmung des Spulenkerns (6) aufgenommen sind,
wobei der Spulenkern (6) zweiteilig oder mehrteilig ausgeführt ist,
wobei ein erster Teil des Spulenkerns (6) topfförmig gestaltet ist und ein zweiter Teil als Innenring (3) ausgeführt ist, der in dem topfförmigen ersten Teil aufgenommen ist,
wobei die Dauermagnete (5) zwischen dem ersten und dem zweiten Teil angeordnet sind,
wobei die Dauermagnete (5) jeweils auf derselben Axialposition und auf demselben Radialabstand angeordnet sind, aber in Umfangsrichtung von einander beabstandet sind,
wobei die Spule (2) formschlüssig am Innenring (3) mittels einer Haltefeder (7) gehalten ist.

2. Bremsanordnung nach Anspruch 1,
**dadurch gekennzeichnet, dass**
der Mitnehmer (11) mittels Passfederverbindung mit der Welle (4) verbunden ist.

3. Bremsanordnung nach mindestens einem der vorangegangenen Ansprüche,
**dadurch gekennzeichnet, dass**
im gelüfteten Zustand der Bremse die Ankerscheibe (1) an einem ferromagnetischen Teil, insbesondere Innenring (3), anliegt, in oder von welchem die Spule (2) aufgenommen ist.

4. Bremsanordnung nach mindestens einem der vorangegangenen Ansprüche,
**dadurch gekennzeichnet, dass**
im eingefallenen Zustand die Ankerscheibe (1) von den Federelementen auf den Bremsbelagträger (12) derart gedrückt wird, dass der Bremsbelagträger (12) auf die Bremsfläche gedrückt wird, wobei der Bremsbelagträger (12) axial zwischen Ankerscheibe (1) und dem die Bremsfläche aufweisenden Teil angeordnet ist.

5. Bremsanordnung nach mindestens einem der vorangegangenen Ansprüche,
**dadurch gekennzeichnet, dass**
im eingefallenen Zustand ein Luftspalt zwischen Ankerscheibe (1) und dem die Spule (2) aufnehmenden Teil vorhanden ist
insbesondere wobei im gelüfteten Zustand kein Luftspalt zwischen Ankerscheibe (1) und einem als Spulenkern (6) fungierenden Teil vorhanden ist, insbesondere wobei die Dauermagnete (5) mit dem als Spulenkern (6) fungierenden Teil verbunden und/oder berührend zu diesem angeordnet sind.

6. Bremsanordnung nach mindestens einem der vorangegangenen Ansprüche,
**dadurch gekennzeichnet, dass**
die Dauermagnete (5) an dem die Spule (2) aufnehmenden Teil berührend angeordnet sind.

7. Verfahren zum Betreiben einer Bremsanordnung mit Spule (2) nach mindestens einem der vorangegangenen Ansprüche
wobei die Spule (2) elektrisch mit einer Kapazität in Reihe geschaltet ist,
**dadurch gekennzeichnet, dass**
zum Lüften die Reihenschaltung von einer Gleichspannungsquelle versorgt wird und zum Einfallen die Reihenschaltung kurzgeschlossen wird beziehungsweise eine verschwindend geringe Spannung an die Reihenschaltung angelegt wird.

## Claims

1. A brake arrangement having
- an armature plate (1),
- a coil core (6),
- a coil (2),
- a brake lining carrier (12),
- a part having a braking surface, in particular a bearing plate (10),
- permanent magnets (5),
- a shaft (4) and
- a driver (11),
wherein the armature plate (1) is arranged in a rotationally-fixed yet axially movable manner in relation to the coil core (6),
wherein coil (2), coil core (6) and the part having a braking surface are connected, in particular securely connected,
wherein the shaft (4) is securely connected to the driver (11),
wherein the driver (11) has external toothing engaging internal toothing of the brake lining carrier (12), so that the brake lining carrier (12) is connected in a rotationally-fixed yet axially movable manner to the driver (11) and consequently the shaft (4),
wherein the brake arrangement can be brought into a released state or an applied state, wherein the armature plate (1) is arranged closer to the coil (2) in the released state of the brake arrangement than in the applied state of the brake arrangement,
wherein a spring force generated by spring elements acts upon the armature plate (1), wherein the permanent magnets (5) are arranged in such a manner that the armature plate (1) can be held in the released state by the permanent magnets (5), in particular when there is no current flow through the coil (2), in particular wherein the force brought about by the permanent magnets (5) and acting upon the armature plate (1) quantitatively exceeds the spring force,
wherein the armature plate (1) is held in the applied state by the spring force, in particular when there is no current flow through the coil (2), in particular wherein the spring force quantitatively exceeds the force brought about by the permanent magnets (5) and acting upon the armature plate (1),
wherein the coil (2) is series-connected to a capacitor, wherein the series circuit can be supplied from a d.c. voltage source for release and wherein the series circuit can be short-circuited for brake application,
in particular wherein a controllable switch for short-circuiting of the series circuit is provided and wherein a controllable switch for connection of the series circuit to the d.c. voltage source is provided,
wherein the permanent magnets (5) are received in a pot-shaped recess of the coil core (6), wherein the coil core (6) is two-part or multi-part,
wherein a first part of the coil core (6) is pot-shaped in design and a second part is in the form of an inner ring (3) which is received in the pot-shaped, first part,
wherein the permanent magnets (5) are arranged between the first and the second part, wherein the permanent magnets (5) are each arranged at the same axial position and at the same radial spacing, however are spaced apart from one another in the circumferential direction,
wherein the coil (2) is held on the inner ring (3) in a form-locked manner by means of a retaining spring (7).

2. A brake arrangement according to claim 1, **characterised in that** the driver (1) is connected to the shaft (4) by means of a feather key connection.

3. A brake arrangement according to at least one of the preceding claims, **characterised in that** in the released state of the brake, the armature plate (1) rests against a ferromagnetic part, in particular inner ring (3), in or by which the coil (2) is received.

4. A brake arrangement according to at least one of the preceding claims, **characterised in that** in the applied state, the armature plate (1) is pressed onto the brake lining carrier (12) by the spring elements in such a manner that the brake lining carrier (12) is pressed onto the braking surface, wherein the brake lining carrier (12) is arranged axially between armature plate (1) and the part having the braking surface.

5. A brake arrangement according to at least one of the preceding claims, **characterised in that** in the applied state, an air gap is present between armature plate (1) and the part receiving the coil (2),
in particular wherein in the released state there is no air gap present between armature plate (1) and a part functioning as coil core (6), in particular wherein the permanent magnets (5) are connected to the part functioning as coil core (6) and/or are arranged in contact therewith.

6. A brake arrangement according to at least one of the preceding claims, **characterised in that** the permanent magnets (5) are arranged in a contacting manner on the part receiving the coil (2).

7. A method of operating a brake arrangement with coil (2) according to at least one of the preceding claims, wherein the coil (2) is electrically series-connected to a capacitor, **characterised in that** the series circuit is supplied by a d.c. voltage source for release and the series circuit is short-circuited or an imperceptibly low voltage is applied to the series connection for application.

## Revendications

1. Dispositif de freinage comprenant
- un disque d'induit (1),
- un noyau (6) de bobine,
- une bobine (2),
- un support (12) de garniture de freinage,
- une pièce, en particulier un bouclier de palier (10) comportant une surface de freinage,
- des aimants permanents (5),
- un arbre (4) et
- un organe d'entraînement (11),
le disque d'induit (1) étant agencé avec verrouillage rotatif, mais toutefois avec mobilité axiale par rapport au noyau (6) de la bobine,
la bobine (2), le noyau (6) de ladite bobine, et la pièce comportant une surface de freinage, étant reliés et notamment reliés de façon rigide,
l'arbre (4) étant relié rigidement à l'organe d'entraînement (11),
lequel organe d'entraînement (11) est muni d'une denture extérieure engrenant dans une denture intérieure du support (12) de garniture de freinage, de telle sorte que ledit support (12) de la garniture de freinage soit relié audit organe d'entraînement (11), et donc audit arbre (4), avec verrouillage rotatif, mais néanmoins avec mobilité axiale,
sachant que ledit dispositif de freinage peut être amené à un état désaéré ou à un état engagé,
sachant qu'à l'état désaéré du dispositif de freinage, le disque d'induit (1) est plus rapproché de la bobine (2) qu'à l'état engagé dudit dispositif de freinage,
sachant qu'une force élastique, engendrée par des éléments élastiques, agit sur ledit disque d'induit (1),
les aimants permanents (5) étant agencés de façon telle que le disque d'induit (1) puisse être retenu par lesdits aimants permanents (5) à l'état désaéré, la bobine (2) étant en particulier privée de courant, sachant notamment que la valeur de la force, engendrée par lesdits aimants permanents (5) et agissant sur ledit disque d'induit (1), est supérieure à celle de la force élastique,
le disque d'induit (1) étant retenu par la force élastique à l'état engagé, la bobine (2) étant en particulier privée de courant, sachant notamment que la valeur de ladite force élastique est supérieure à celle de la force engendrée par les aimants permanents (5) et agissant sur ledit disque d'induit (1),
étant précisé que
la bobine (2) est branchée en série avec un condensateur, le branchement en série pouvant être alimenté à partir d'une source de tension continue, en vue d'instaurer le désaérage, et ledit branchement pouvant être court-circuité en vue d'instaurer l'engagement du frein, sachant notamment qu'un interrupteur commandable est prévu pour le court-circuitage du branchement en série, et qu'un interrupteur commandable est prévu pour le raccordement dudit branchement en série à la source de tension continue,
les aimants permanents (5) étant logés dans un évidement, en forme de coupelle, du noyau (6) de la bobine,
lequel noyau (6) de la bobine est réalisé en deux ou plusieurs parties,
une première partie dudit noyau (6) de la bobine étant de configuration en coupelle, et une seconde partie étant réalisée sous la forme d'une bague intérieure (3) logée dans ladite première partie de configuration en coupelle,
sachant que les aimants permanents (5) sont disposés, à chaque fois, au même emplacement axial et à la même distance radiale en étant, toutefois, espacés les uns des autres dans la direction périphérique,
la bobine (2) étant retenue sur la bague intérieure (3) par complémentarité de formes, au moyen d'un ressort de maintien (7).

2. Dispositif de freinage selon la revendication 1,
**caractérisé par le fait que**
l'organe d'entraînement (11) est relié à l'arbre (4) au moyen d'une liaison clavetée.

3. Dispositif de freinage selon au moins l'une des revendications précédentes,
**caractérisé par le fait**
**qu'**à l'état désaéré du frein, le disque d'induit (1) est en applique sur une pièce ferromagnétique, notamment la bague intérieure (3), dans ou par laquelle la bobine (2) est reçue.

4. Dispositif de freinage selon au moins l'une des revendications précédentes,
**caractérisé par le fait**
**qu'**à l'état engagé, le disque d'induit (1) est pressé sur le support (12) de la garniture de freinage, par les éléments élastiques, de telle manière que ledit support (12) de la garniture de freinage soit pressé sur la surface de freinage, ledit support (12) de la garniture de freinage étant interposé axialement entre ledit disque d'induit (1) et la pièce comportant ladite surface de freinage.

5. Dispositif de freinage selon au moins l'une des revendications précédentes,
**caractérisé par le fait**
**qu'**à l'état engagé, un entrefer est présent entre le disque d'induit (1) et la pièce recevant la bobine (2),
sachant notamment qu'à l'état désaéré, aucun entrefer n'est présent entre ledit disque d'induit (1) et une pièce remplissant une fonction de noyau (6) de bobine, les aimants permanents (5) étant notamment reliés à ladite pièce remplissant la fonction du noyau (6) de la bobine, et/ou agencés pour être en contact avec cette dernière.

6. Dispositif de freinage selon au moins l'une des revendications précédentes,
**caractérisé par le fait que**
les aimants permanents (5) sont agencés pour être en contact avec la pièce recevant la bobine (2).

7. Procédé d'actionnement d'un dispositif de freinage muni d'une bobine (2), conforme à au moins l'une des revendications précédentes,
ladite bobine (2) étant branchée électriquement en série avec un condensateur,
**caractérisé par le fait que**,
pour instaurer le désaérage, le branchement en série est alimenté par une source de tension continue et que, pour instaurer l'engagement, ledit branchement en série est court-circuité, ou bien une tension infime est respectivement appliquée audit branchement en série.
